# EUROPÄISCHE PATENTANMELDUNG

(11) **EP 1 236 917 A2**
(43) Veröffentlichungstag der Anmeldung: **04.09.2002**
(21) Anmeldenummer: 01129360.2
(22) Anmeldetag: 17.12.2001
(51) Int. Cl.: F16D 23/12, F16D 28/00

(54) **Betätigungseinrichtung für eine Reibungskupplung**

(30) Priorität: 28.02.2001 DE 10109467
(71) Anmelder: ZF Sachs AG, 97424 Schweinfurt (DE)
(72) Erfinder: Ratte, Andreas, Dipl.-Ing., 97456 Dittelbrunn (DE); Wirth, Thomas, Dipl.-Ing., 97523 Schwanfeld (DE); Horst, Alexander, 97422 Schweinfurt (DE); Leimbach, Lutz, Dipl.-Ing., 97422 Schweinfurt (DE)

(57) **Zusammenfassung**

Eine Stelleinrichtung, insbesondere zur Betätigung einer Reibungskupplung, umfasst ein Abtriebsglied (16), Wenigstens zwei Stellantriebe (26, 28), eine Bewegungsumsetzanordnung (14), durch welche eine Antriebsbewegung der wenigstens zwei Stellantriebe (26, 28) in eine Stellbewegung des Abtriebsglieds (16) umsetzbar ist, eine Ansteuervorrichtung, durch welche die wenigstens zwei Stellantriebe (26, 28) zur Erzeugung einer Antriebsbewegung aktivierbar sind. Dabei ist vorgesehen, dass ein von der Stelleinrichtung (10) vorzunehmender Stellvorgang in wenigstens zwei Betriebsphasen unterteilt ist und dass die Ansteuervorrichtung dazu ausgebildet ist, in wenigstens einer der Betriebsphasen wenigstens einen der Stellantriebe (26, 28) zur Erzeugung einer Antriebsbewegung zu aktivieren und in wenigstens einer weiteren der Betriebsphasen den wenigstens einen der Stellantriebe (26, 28) nicht zur Erzeugung einer Antriebsbewegung zu aktivieren.

## Beschreibung

Die vorliegende Erfindung betrifft eine Stelleinrichtung, insbesondere zur Betätigung einer Reibungskupplung, umfassend ein Abtriebsglied, wenigstens'zwei Stellantriebe, eine Bewegungsumsetzanordnung, durch welche eine Antriebsbewegung der wenigstens zwei Stellantriebe in eine Stellbewegung des Abtriebsglieds umsetzbar ist, sowie eine Ansteuervorrichtung, durch welche die wenigstens zwei Stellantriebe zur Erzeugung einer Antriebsbewegung aktivierbar sind.

Aus der DE 197 23 362 A1 ist eine Stelleinrichtung bekannt, durch welche eine Reibungskupplung in einem Kraftfahrzeug betätigt werden kann. Die Stelleinrichtung umfasst zwei Stellantriebe. Ein erster der Stellantriebe ist dazu vorgesehen, während eines normalen Betriebs gemäß der Ansteuerung durch eine Ansteuervorrichtung die Kupplung ein- bzw. auszurücken. Tritt ein Fehler auf, beispielsweise in Form des Ausfalls dieses Stellantriebs, so kann der zweite der Stellantriebe wirksam werden, um zumindest im Notbetrieb die Kupplung ein- bzw. auszurücken und beispielsweise das Fahren bis zur nächsten Werkstatt zu ermöglichen. Diese beiden Stellantriebe können derart ausgelegt sein, dass der im Notbetrieb einzusetzende Stellantrieb ein kleineres Leistungsvermögen aufweist, als der normalerweise einzusetzende Stellantrieb.

Insbesondere bei in Verbindung mit Reibungskupplungen eingesetzten Stelleinrichtungen besteht das Problem, dass über einen Stellvorgang hinweg eine sich ändernde Leistungs- bzw. Kraftabgabe einer derartigen Stelleinrichtung erforderlich ist, insbesondere auch bedingt durch die mit der Einkuppellage sich ändernde Karftbeaufschlagung durch den Kraftspeicher der Reibungskupplung. Dies bedeutet jedoch, dass ein bei einer derartigen Stelleinrichtung einzusetzender Stellantrieb so dimensioniert sein muss, dass er auch die größte erforderliche Kraft noch mit Sicherheit aufbringen kann. Da moderne Kraftfahrzeugmotoren zur Abgabe vergleichsweise großer Antriebsdrehmomente in der Lage sind, müssen auch die Kupplungen entsprechend dimensioniert werden mit der Folge, dass die eingesetzten Kraftspeicher zunehmend stärker werden und auch in den Stelleinrichtungen entsprechend stärkere Stellantriebe zur Erzeugung der erforderlichen Ein- bzw. Auskuppelkräfte vorgesehen sein müssen. Der Einsatz größerer bzw. stärker dimensionierter Stellantriebe führt jedoch zu einer verschlechterten dynamischen Eigenschaft derartiger Stelleinrichtungen, da größer dimensionierte Stellantriebe entsprechend träger sind.

Es ist die Aufgabe der vorliegenden Erfindung, eine gattungsgemäße Stelleinrichtung derart weiterzubilden, dass sie eine verbesserte Stellcharakteristik aufweist.

Erfindungsgemäß wird diese Aufgabe gelöst durch eine Stelleinrichtung, insbesondere zur Betätigung einer Reibungskupplung, umfassend ein Abtriebsglied, wenigstens zwei Stellantriebe, eine Bewegungsumsetzanordnung, durch welche eine Antriebsbewegung der wenigstens zwei Stellantriebe in eine Stellbewegung des Abtriebsglieds umsetzbar ist, sowie eine Ansteuervorrichtung, durch welche die wenigstens zwei Stellantriebe zur Erzeugung einer Antriebsbewegung aktivierbar sind.

Dabei ist weiter vorgesehen, dass ein von der Stelleinrichtung vorzunehmender Stellvorgang in wenigstens zwei Betriebsphasen unterteilt ist und dass die Ansteuervorrichtung dazu ausgebildet ist, in wenigstens einer der Betriebsphasen wenigstens einen der Stellantriebe zur Erzeugung einer Antriebsbewegung zu aktivieren und in wenigstens einer weiteren der Betriebsphasen den wenigstens einen der Stellantriebe nicht zur Erzeugung einer Antriebsbewegung zu aktivieren.

Bei der vorliegenden Erfindung können also in verschiedenen Betriebsphasen verschiedene Stellantriebe bzw. verschiedene Anzahlen an Stellantrieben wirksam sein. Dies ermöglicht eine Anpassung des durch den bzw. die Stellantriebe bei Durchführung eines Stellvorgangs erzeugten Stellmomentes bzw. der erzeugten Stellkraft an die tatsächlich während eines Stellvorgangs erforderliche und sich auch über den Stellvorgang hinweg ändernde Kraft. In Phasen, in welchen nur eine geringere Kraftabgabe oder Momentenabgabe erforderlich ist, kann beispielsweise ein schwächer dimensionierter Stellantrieb bzw. eine geringere Anzahl an Stellantrieben wirksam sein, während in Phasen, in welchen eine große Kraftabgabe erforderlich ist, ein entsprechend stärker dimensionierter Stellantrieb bzw. mehrere Stellantriebe zum Einsatz kommen können.

Beispielsweise kann vorgesehen sein, dass in der wenigstens einen der Betriebsphasen die Ansteuervorrichtung nur den wenigstens einen der Stellantriebe zur Erzeugung einer Antriebsbewegung aktiviert und in der wenigstens einen weiteren der Betriebsphasen wenigstens einen anderen der Stellantriebe zur Erzeugung einer Antriebsbewegung aktiviert.

Wie bereits angesprochen, besteht eine weitere vorteilhafte Ausgestaltungsvariante der vorliegenden Erfindung darin, dass wenigstens zwei der Stellantriebe unterschiedliches Leistungsvermögen aufweisen und dass die Ansteuervorrichtung in verschiedenen Betriebsphasen Stellantriebe verschiedenen Leistungsvermögens zur Erzeugung einer Antriebsbewegung ansteuert.

Um den Übergang zwischen Betriebsphasen insbesondere auch angepasst an die eingesetzten Stellantriebe festlegen bzw. vornehmen zu können, wird vorgeschlagen, dass die Stellantriebe elektromotorische Stellantriebe sind und dass ein Übergang von einer Betriebsphase zu einer weiteren Betriebsphase dann vorliegt, wenn ein in wenigstens einem während der einen Betriebsphase aktivierten Stellantrieb fließender Strom einen vorbestimmten Schwellenwert erreicht. Durch Beobachtung des über einen derartigen Stellantrieb hinweg fließenden Stroms kann festgelegt werden, wann dieser eine bestimmte Kraft bzw. ein bestimmtes Moment erzeugt bzw. wann der Stellantrieb sich in den Bereich des durch diesen maximal erzeugbaren Antriebsmomentes bewegt. Es kann in Abhängigkeit von diesem Strom bei Erreichen eines bestimmten zugeordneten Schwellenwertes dann entschieden werden, dass nunmehr in eine nächste Betriebsphase übergegangen wird, in welcher ein anderer oder/und zusätzlich ein weiterer Stellantrieb aktiviert wird.

Beispielsweise kann vorgesehen sein, dass der Stellvorgang ein Auskuppelvorgang einer Reibungskupplung ist und dass beim Verstellen von einer Einkuppelstellung in Richtung Auskuppeln in einer ersten Betriebsphase ein erster der Stellantriebe aktiviert ist und in einer zweiten Betriebsphase ein zweiter der Stellantriebe aktiviert ist. Dabei ist vorzugsweise der zweite der Stellantriebe mit einem größeren Leistungsvermögen ausgestattet als der erste der Stellantriebe.

Des Weiteren kann vorgesehen sein, dass der Stellvorgang ein Einkuppelvorgang einer Reibungskupplung ist und dass beim Verstellen von einer Auskuppelstellung in Richtung Einkuppeln in einer ersten Betriebsphase ein erster der Stellantriebe aktiviert ist und in einer zweiten Betriebsphase ein zweiter der Stellantriebe aktiviert ist. In diesem Falle weist vorzugsweise der zweite der Stellantriebe ein kleineres Leistungsvermögen auf als der erste der Stellantriebe.

Die erfindungsgemäße Stelleinrichtung kann ferner derart ausgebildet sein, dass das Abtriebsglied durch ein Krafterzeugungsorgan eines zu betätigenden Systems beaufschlagbar ist und dass die Stelleinrichtung ferner wenigstens ein das Abtriebsglied beaufschlagendes und der Krafteinwirkung des wenigstens einen Krafterzeugungsorgans entgegenwirkendes Kompensationskrafterzeugungsorgan aufweist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Draufsicht auf eine erfindungsgemäße Stelleinrichtung bei geöffnetem Gehäuse derselben;
- Fig. 2: eine blockbildartige Darstellung der Stelleinrichtung der Fig. 1;
- Fig. 3: eine prinzipartige Darstellung wesentlicher Bereiche der in Fig. 1 gezeigten Stelleinrichtung;
- Fig. 4: eine im konstruktiven Aufbau der Fig. 2 entsprechende Ausgestaltung einer erfindungsgemäßen Stelleinrichtung;
- Fig. 5: eine Abwandlung der in Fig. 4 erkennbaren Stelleinrichtung;
- Fig. 6: eine weitere Abwandlung der in Fig. 4 dargestellten Stelleinrichtung;
- Fig. 7: eine blockbildartige Darstellung einer alternativen Ausgestaltungsart einer erfindungsgemäßen Stelleinrichtung;
- Fig. 8: eine weitere schematische Ansicht einer erfindungsgemäßen Stelleinrichtung;
- Fig. 9: eine weitere schematische Ansicht einer erfindungsgemäßen Stelleinrichtung;
- Fig. 10: den vom Stellweg abhängigen Verlauf verschiedener im Bereich einer Stelleinrichtung auftretender Kräfte bzw. Drehmomente.

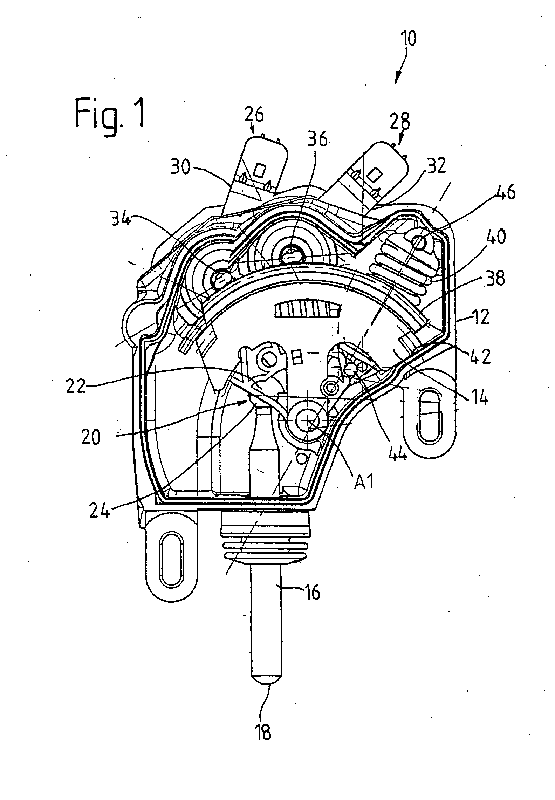

In Fig. 1 ist eine erfindungsgemäße Stelleinrichtung dargestellt. Diese Stelleinrichtung umfasst ein Gehäuse 12 in welchem ein Segmentzahnrad 14 um eine Achse A1 drehbar angeordnet ist. Die Stelleinrichtung 10 weist ferner ein als Stößel ausgebildetes Abtriebsglied 16 auf, das mit seinem freien Ende 18 zur Beaufschlagung einer Kupplung, entweder über einen direkten mechanischen Ausrückermechanismus oder über eine Geberzylinder-Nehmerzylinder-Anordnung, ausgebildet ist. Der Stößel 16 ist über eine Gelenkverbindung 20 mit dem Segmentzahnrad 14 verbunden, wobei am Segmentzahnrad 14 eine Gelenkpfanne 22 gebildet ist, in welcher eine Gelenkkugel 24 des Stößels 16 aufgenommen ist.

Die Stelleinrichtung 10 umfasst ferner zwei Stellantriebe 26, 28. Die beiden Stellantriebe 26, 28 umfassen jeweils einen Elektromotor 30, 32, und Abtriebszahnräder 34, 36 der Stellantriebe 26, 28 stehen in Kämmeingriff mit einer Verzahnung 38 des Segmentzahnrads 40.

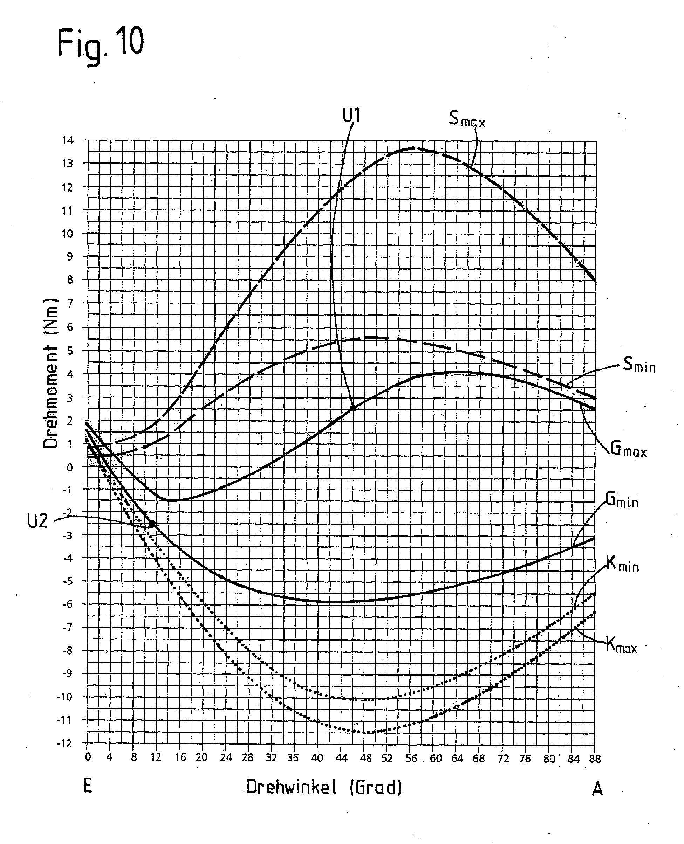

Ferner weist die erfindungsgemäße Stelleinrichtung 10 eine Kompensationsfeder 40 auf. Die Kompensationsfeder 40 ist in einem ersten Abstützbereich 44 an dem Segmentzahnrad 14 abgestützt und ist in einem zweiten Abstützbereich 46 an dem Gehäuse 12 abgestützt. Die Anordnung ist derart, dass bei Positionierung des Stößels 16 in der in das Gehäuse 12 maximal zurückgezogenen Stellung, welche in Fig. 1 erkennbar ist, und dementsprechendem Anliegen des Segmentzahnrads an einem Gehäuseanschlag 42, der Abstützbereich 44 auf einer Seite einer den Abstützbereich 46 mit der Achse A1 verbindenden Linie liegt, welche dem Gehäuseanschlag 42 zugewandt ist. Dadurch ist in dieser Übertotpunktstellung der Kompensationsfeder 40 das Segmentzahnrad 14 durch die Kompensationsfeder 40 stabil in diese Endlage vorgespannt. Bei Erregung der Stellantriebe 26, 28 und Verschwenkung des Segmentzahnrads 14 aus der in Fig. 1 dargestellten Positionierung entgegen dem Uhrzeigersinn wird zunächst die Kompensationsfeder 40 geringfügig komprimiert, und ab dem Zeitpunkt, zu welchem der Abstützbereich 44 die angesprochene Verbindungslinie zwischen dem Abstützbereich 46 und der Achse A1 überschreitet, unterstützt die Kompensationsfeder 40 die weitere Verschwenkbewegung des Segmentzahnrads 14. Wird im Zuge einer derartigen Verschwenkung des Segmentzahnrads 14 beispielsweise eine mit einem Kraftspeicher, beispielsweise in Form einer Membranfeder, ausgestattete Reibungskupplung ausgerückt, so wird dabei gegen die Vorspannkraft dieses Kraftspeichers gearbeitet, wobei durch geeignete Abstimmung der Federkraft der Kompensationsfeder 40 auf den eingesetzten Kraftspeicher hier ein Zustand erreicht werden kann, in welchem durch die Stellantriebe 26, 28 nur ein - vergleichsweise geringer Momentenanteil zur Durchführung der jeweiligen Stellbewegung beigetragen werden muss. Dies wird später mit Bezug auf die Fig. 10 noch ausführlich beschrieben.

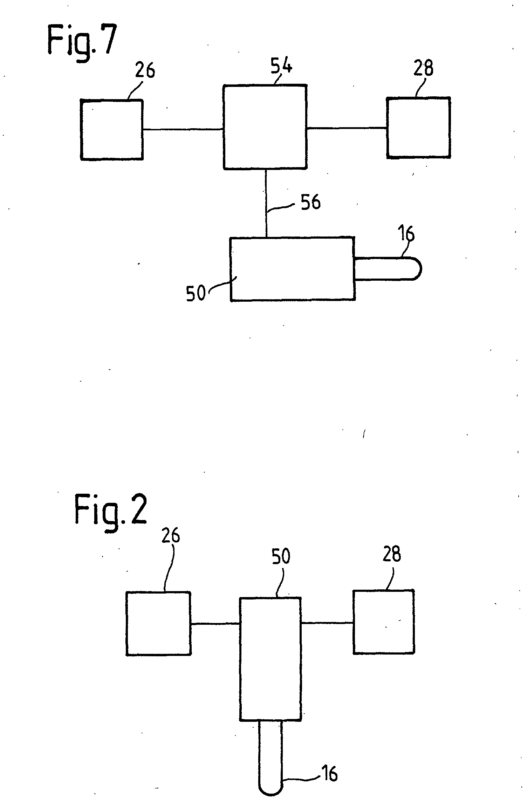

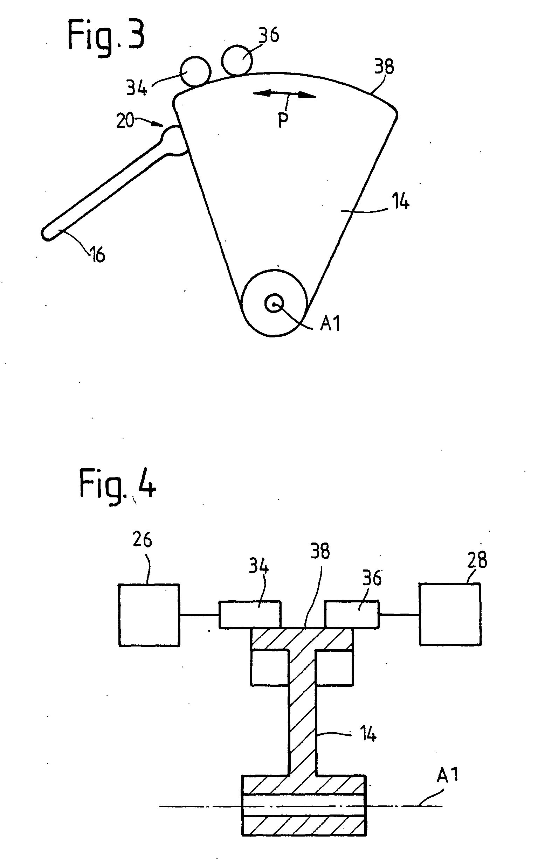

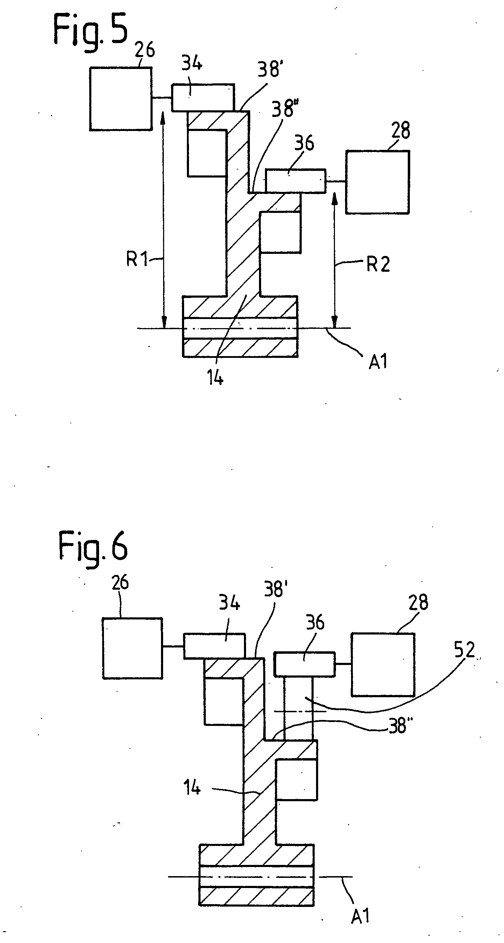

Die Stelleinrichtung 10 der Fig. 1 ist in Fig. 2 und in Fig. 3 hinsichtlich des grundsätzlichen Aufbaus noch einmal dargestellt. Man erkennt die Stellantriebe 26, 28, die entweder von der gleichen Seite oder von, wie in Fig. 2 erkennbar, entgegengesetzten Seiten her mit ihren jeweiligen Antriebszahnrädern 34, 36 mit dem Segmentzahnrad 14 des in Fig. 2 allgemein mit 50 bezeichneten Aktuatorteils zusammenwirken können. Dies ist auch in Fig. 4 noch einmal verdeutlicht. Bei der in Fig. 5 dargestellten Ausgestaltungsvariante wirken die beiden Stellantriebe 26, 28 mit ihren Abtriebszahnrädern 34, 36 mit jeweiligen Verzahnungsbereichen 38', 38" des Segmentzahnrads 14 zusammen, die bezüglich der Achse A1 unterschiedliche Radialabstände R1, R2 aufweisen. Es werden somit unterschiedliche Übersetzungs- und Hebelverhältnisse eingestellt, so dass für die verschiedenen Stellantriebe 26, 28 auch unterschiedliche Wirkcharakteristiken erzielt werden können. Bei der Ausgestaltungform gemäß Fig. 6 ist zusätzlich zwischen dem Stellantrieb 28 und dem Segmentzahnrad 14 eine Getriebeanordnung in Form eines Zahnrads 52 vorgesehen, so dass eine weitere Momentenumsetzung hier eingeführt werden kann.

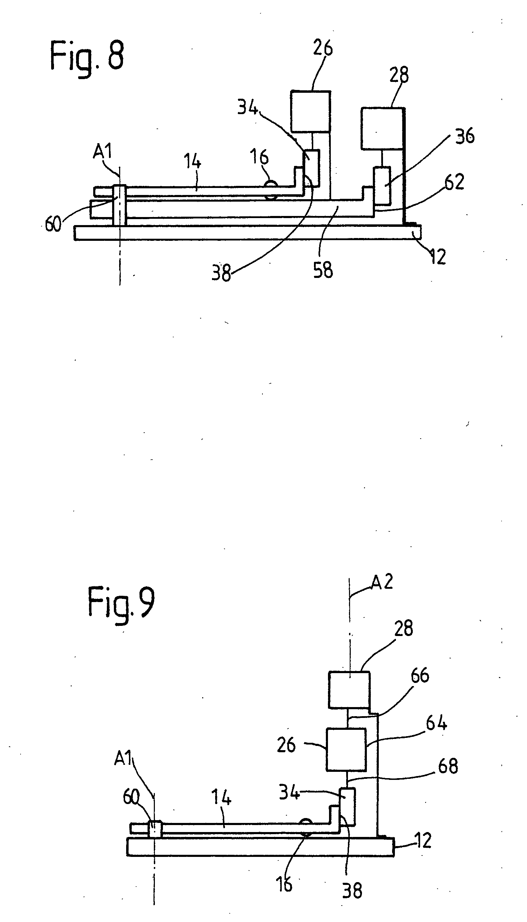

Eine weitere alternative Ausgestaltungsart einer erfindungsgemäßen Stelleinrichtung ist in Fig. 7 dargestellt. Bei dieser in Fig. 7 erkennbaren Ausgestaltungsart leiten die beiden Stellantriebe 26, 28 ihr Antriebsmoment in eine Getriebeanordnung 54 ein, und ein Abtriebsglied 56 der Getriebeanordnung 54 treibt dann den Aktuatorteil 50 der erfindungsgemäßen Stelleinrichtung an.

Die Betriebscharakteristik der erfindungsgemäßen Stelleinrichtung, welche mehrere Stellantriebe 26, 28, also im dargestellten Beispiel zwei Stellantriebe 26, 28, aufweist, wird nachfolgend mit Bezug auf die Fig. 10 beschrieben. Die Fig. 10 zeigt in Abhängigkeit vom Drehwinkel des Segmentzahnrads 14 verschiedene in der Stelleinrichtung auftretende Kräfte bzw. Drehmomente. Dabei ist ein Drehwinkel von 0° einer Einkuppelstellung E der zu betätigenden Reibungskupplung zugeordnet. In dieser Positionierung liegt das Segmentzahnrad, so wie in Fig. 1 erkennbar, am Gehäuseanschlag 42 an. Der Drehwinkel 88° entspricht einer Auskuppelstellung A der Reibungskupplung. Die Kurven Sₘₐₓ und Sₘᵢₙ repräsentieren das über den Stößel 16 auf das Segmentzahnrad 14 eingeleitete bzw. am Segmentzahnrad 14 wirksam werdende Drehmoment, wobei die entsprechende Kraft durch den in der Reibungskupplung vorgesehenen Kraftspeicher erzeugt wird und über verschiedene Getriebe- oder Übertragungsanordnungen auf den Stößel 16 geleitet wird. Die beiden Kurven Sₘₐₓ und Sₘᵢₙ sind jeweils erzeugt für das maximal zu erwartende kupplungsseitig auf das Segmentzahnrad 14 geleitete Drehmoment bzw. das entsprechende minimal zu erwartende Drehmoment. Hier werden verschiedene Betriebszustände betrachtet, welche eine Änderung dieses Drehmoments zur Folge haben. Zum Erzeugen der Kurve Sₘₐₓ werden all diejenigen Zustände herangezogen, welche eine Maximierung des auf den Stößel 16 geleiteten bzw. das Segmentzahnrad 14 übertragenen Drehmomentes zur Folge haben. Hier wird zum einen angenommen, dass die Reibungskupplung in einem vergleichsweise stark verschlissenen Zustand ist, d.h. die Reibbeläge sind dünner geworden, die Anpressplatte hat sich im eingekuppelten Zustand in Richtung auf das Schwungrad zu verschoben und der Kraftspeicher bzw. die Membranfeder hat sich in seiner/ihrer Einbaulage derart verändert, dass die erzeugte Vorspannkraft zugenommen hat. Ferner wird angenommen, dass diese Kurve Sₘₐₓ für einen Zustand betrachtet wird, in welchem die Kupplung ausgerückt wird, d.h. ein Übergang vom Zustand E zum Zustand A stattfindet. Der Grund dafür, dass beim Ausrücken größere Momente von der Kupplung her auf das Segmentzahnrad 14 wirken können, ist im Wesentlichen in der Hysterese in der Kraftcharakteristik des in der Kupplung eingesetzten Kraftspeichers zu finden. Weiter steht die Kurve Sₘₐₓ für einen Zustand, in welchem die Kupplung in einem nicht rotierenden Zustand ist. Im Gegensatz dazu steht die Kurve Sₘᵢₙ für all diejenigen Zustände, welche zur Minimierung des über den Stößel 16 auf das Segmentzahnrad 14 geleiteten Drehmoments führen. Dazu wird zum einen angenommen, dass die Kupplung in einem neuen, im Wesentlichen nicht verschlissenen Zustand ist, dass die Kupplung in Richtung Einkuppelstellung verstellt wird und dass das System mit vergleichsweise hoher Drehzahl dreht.

Die beiden Kurven Kₘᵢₙ und Kₘₐₓ stehen in entsprechender Weise für das vermittels der Kompensationsfeder 40 auf das Segmentzahnrad 14 übertragene bzw. beim Segmentzahnrad 14 erzeugte Drehmoment. Auch hier ist wieder die Kurve Kₘₐₓ für den Zustand erzeugt, in welchem das Moment maximal ist, während die Kurve Kₘᵢₙ für den Zustand steht, in welchem dieses Moment minimal ist. Der Unterschied ist im Wesentlichen bedingt durch die bei der Kompensationsfeder 40 vorhandene Hysterese, wobei hier das größere Federmoment bzw. die größere Federkraft beim Übergang von einem Auskuppelzustand zu einem Einkuppelzustand vorliegt, während beim Übergang vom Einkuppelzustand zum Auskuppelzustand das kleinere Moment bzw. die kleinere Kraft vorhanden ist. Dies bedeutet letztendlich, dass die Kurve Kₘᵢₙ der Kurve Sₘₐₓ zuzuordnen ist und die Kurve Kₘₐₓ der Kurve Sₘᵢₙ zuzuordnen ist, da diese Kurvenpaare dann jeweils für den Einrückzustand bzw. den Ausrückzustand stehen. Es ergibt sich somit durch Überlagerung der Kurven Sₘₐₓ und Kₘᵢₙ eine Kurve Gₘₐₓ für das Gesamtmoment und es ergibt sich durch Überlagerung der Kurven Sₘᵢₙ und Kₘₐₓ eine Kurve Gₘᵢₙ. Dabei repäsentiert die Kurve Gₘᵢₙ letztendlich einen Momentenverlauf bzw. einen Bereich für einen Momentenverlauf, wie er im Neuzustand der Kupplung zu erwarten ist, wobei hier, beruhend auf der Tatsache, dass abhängig von Einkuppel- oder Auskuppelzustand die Kompensationsfeder verschiedene Kräfte liefern wird, im Neuzustand für den Einkuppelvorgang einerseits und den Auskuppelvorgang andererseits sich Kurven ergeben werden, die im Bereich der Kurve Gₘᵢₙ liegen. Entsprechendes gilt für den verschlissenen Zustand, in welchem die entsprechenden Einkuppel- bzw. Auskuppelkurven im Bereich der Kurve Gₘₐₓ liegen werden.

Die beiden Kurven Gₘᵢₙ bzw. Gₘₐₓ repräsentieren also im Wesentlichen den Momentenverlauf, welcher bei Durchführung von Ein- bzw. Auskuppelvorgängen durch die Stellantriebe 26, 28, erzeugt werden muss, um die Kupplung verstellen zu können. Der qualitative Verlauf dieser Kurven wird selbstverständlich noch beeinflusst durch die Art des Kraftübertragungsmechanismus zwischen der Stelleinrichtung 10 und der Kupplung sowie durch die verschiedenen Fertigungstoleranzen und das Setzen verschiedener involvierter Komponenten während der Betriebslebensdauer. All diese Faktoren können beim Erzeugen der Kurven Gₘₐₓ bzw. Gₘᵢₙ noch mitberücksichtigt werden.

Bei der Auslegung der erfindungsgemäßen Stelleinrichtung 10, insbesondere bei der Auswahl der Stellantriebe 26, 28, muss nunmehr darauf geachtet werden, dass diese für die gesamte Betriebslebensdauer einer Reibungskupplung die erforderlichen Ein- bzw. Auskuppelmomente liefern können, d.h. der gesamte durch die beiden Kurven Gₘₐₓ und Gₘᵢₙ abgedeckte Wertebereich an Drehmomenten muss erzeugt werden können. Diese Drehmomente sind wieder die bezogen auf das Segmetzahnrad 14 zu betrachtenden Drehmomente, wobei zu berücksichtigen ist, dass durch Zusammenwirkung der Abtriebszahnräder 34, 36 mit dem Segmentzahnrad 14 ein weiterer Getriebemechanismus erzeugt ist, welcher zu einer entsprechenden Momentenüberzetzung der durch die beiden Elektromotoren 30, 32 erzeugten Antriebsmomente beiträgt. Dies bedeutet letztendlich, dass die durch die Elektromotoren maximal erzeugbaren Antriebsmomente geringer sein können, als die anhand der Kurven Gₘₐₓ und Gₘᵢₙ maximal geforderten Momente.

Zur Erklärung der Fig. 10 sei noch ausgeführt, dass der Zustand, in welchem die Kurven Gₘₐₓ bzw. Gₘᵢₙ einen Drehmomentenwert von kleiner Null aufweisen, ein Zustand ist, in welchem das vermittels der Kompensationsfeder erzeugte Drehmoment überwiegt, während im positiven Wertebereich dieser beiden Kurven das über den Stößel 16 generierte Drehmoment überwiegt. Dies bedeutet letztendlich auch, dass abhängig davon, ob von dem Einkuppelzustand E zum Auskuppelzustand A übergegangen wird oder umgekehrt, je nachdem, ob gegen die Kompensationsfeder oder gegen die über den Stößel eingeleitete Kraft gearbeitet werden muss, die Stellantriebe 26, 28 in verschiedenen Phasen ein Antriebsmoment liefern müssen bzw. frei mitlaufen können. So muss beispielsweise bei Durchführung eines Auskuppelvorgangs beginnend bei einem Drehwinkel von 0° bis etwa zu einem Drehwinkel von 4° bei Heranziehung der Kurve Gₘᵢₙ durch die Stellantriebe 26 bzw. 28 ein Antriebsmoment geliefert werden, während ab einem Drehwinkel von etwa 4° die durch die Kompensationsfeder 40 bereitgestellte Kraft alleine dazu in der Lage ist, die Kupplung auszurücken. Bei Übergang von dem Auskuppelzustand A zum Einkuppelzustand E muss jedoch beginnend bei einem Drehwinkel von 88° durch die Stellantriebe 26, 28 am Segmentzahnrad 14 zunächst ein Drehmoment von etwa 3,3 Nm erzeugt werden, welches dann auf einen Maximalwert von etwa 5,8 Nm ansteigt und bis zu einem Drehwinkel von 4° (bezogen auf den Gehäuseanschlag 42) dann auf einen Wert von 0 abfällt. In der Endphase des Einkuppelvorgangs, also zwischen 4° und 0°, muss durch die Stellantriebe kein unterstützendes Drehmoment geliefert werden. Im verschlissenen Zustand der Kupplung, also beispielsweise bei Heranziehung der Kurve Gₘₐₓ als Grundlage für das durch die Stellantriebe 26, 28 am Segmentzahnrad 14 zu erzeugende Drehmoment, muss bei Durchführung eines Auskuppelvorgangs zunächst etwa bis zu einem Drehwinkel von 6° ein antreibendes Moment geliefert werden, während dann im Winkelbereich zwischen 6° und etwa 31° alleine durch das vermittels der Kompensationsfeder 40 erzeugte Moment eine Ausrückbewegung erzeugt werden kann. Zwischen 31° und der Endstellung bei 88° müssen die Stellantriebe 26, 28 dann wieder einen Momentenbeitrag liefern. Bei Durchführung eines Einkuppelvorgangs überwiegt zwischen dem Anfangswinkelbereich von 88° und dem Drehwinkel von etwa 31° zunächst das über den Stößel 16 erzeugte Drehmoment, so dass die Stellantriebe 26, 28 an sich kein unterstützendes Moment liefern müssen. Im Winkelbereich zwischen 31° und 6°, in welchem wieder das vermittels der Kompensationsfeder 40 generierte Drehmoment überwiegt, müssen die Stellantriebe 26, 28 ein unterstützendes Moment liefern, während im Bereich zwischen 6° und 0° dies wiederum nicht erforderlich ist. Es sei hier darauf hingewiesen, dass selbstverständlich in denjenigen Phasen, in welchen die Stellantriebe 26, 28 an sich kein unterstützendes Moment liefern müssten, diese erregt werden können, um beispielsweise die Stellvorgänge schneller bzw. mit definierterem Ablauf durchführen zu können.

Gemäß der vorliegenden Erfindung ist nunmehr vorgesehen, dass ein vermittels der Stelleinrichtung 10 durchzuführender Stellvorgang, also beispielsweise die Verstellung zwischen dem Zustand E (eingerückt) und dem Zustand A (ausgerückt) in verschiedene Betriebsphasen unterteilt wird. Diese Betriebsphasen können beispielsweise definiert sein dadurch, wie groß das durch die Stellantriebe 26, 28 am Segmentzahnrad 14 zu generierende Drehmoment ist. Diesen verschiedenen Betriebsphasen sind verschiedene der Stellantriebe 26, 28 zugeordnet, d.h. in verschiedenen Betriebsphasen werden verschiedene Stellantriebe zur Erzeugung eines Antriebsmomentes angesteuert, während der jeweils andere Stellantrieb derart betrieben werden kann, dass er im Wesentlichen momentan frei mitläuft. In dem in Fig. 10 veranschaulichten Beispiel wurde als Schwellenwert für das am Segmentzahnrad 14 vermittels der Stellantriebe zu erzeugende Drehmoment ein Betrag von 2,5 Nm angenommen. Man erkennt diese beiden Schwellenwerte an den Kurven Gₘₐₓ und Gₘᵢₙ jeweils bei den Punkten U1 und U2. Betrachtet man beispielsweise wieder die Kurve Gₘᵢₙ, so wird also in der Betriebsphase zwischen einem Drehwinkel von 0° und dem dem Punkt U2 zugeordneten Drehwinkel von etwa 11° das durch die Stellantriebe 26, 28 zu erzeugende Drehmoment einen Betrag von weniger als 2,5 Nm haben. In diesem Zustand bzw. in dieser Betriebsphase wird beispielsweise dann der Stellantrieb 26 zur Erzeugung eines Antriebsmoments angesteuert, wobei unterstellt wird, dass der Stellantrieb 26 schwächer dimensioniert ist, als der Stellantrieb 28, d.h. das durch den Stellantrieb 26 maximal erzeugbare Antriebsmoment ist kleiner, als das durch den Stellantrieb 28 maximal erzeugbare Antriebsdrehmoment. In der Betriebsphase, die zwischen dem Punkt U2 und dem maximalen Drehwinkel von etwa 88° liegt, ist insbesondere beim Übergang von der Auskuppelstellung A zur Einkuppelstellung E ein deutlich größeres Drehmoment durch die Stellantriebe zu erzeugen, so dass in dieser Phase dann der Stellantrieb 28 angesteuert wird, um ein Antriebsmoment zu liefern. Der Stellantrieb 26 kann dabei derart angesteuert werden, dass er im Wesentlichen momentenfrei mitläuft bzw. in dem Falle, in dem keine selbsthemmenden Verzahnungsanordnungen vorgesehen sind, kann auf eine Erregung vollständig verzichtet werden. Entsprechendes gilt auch dann, wenn die Kurve Gₘₐₓ als Grundlage für das zu erzeugende Antriebsmoment heranzuziehen ist. Im Bereich zwischen 0° und etwa 46°, also dem Punkt U1, ist der Betrag des zu erzeugenden Drehmoments kleiner als der gesetzte Schwellenwert, so dass auch hier wieder der schwächer dimensionierte Stellantrieb 26 zum Einsatz kommen kann. Zwischen U1 und der Auskuppelstellung bei 88° ist wieder ein größeres Antriebsmoment zu erzeugen, mit der Folge, dass hier wieder der stärkere Stellantrieb 28 erregt wird.

Das Umschalten von einem der Stellantriebe auf einen anderen der Stellantriebe, d.h. der Übergang von einer Betriebsphase, in welcher ein bestimmter Stellantrieb zu erregen ist, in eine Betriebsphase, in welcher ein anderer der Stellantriebe zu erregen ist, kann beispielsweise beruhend auf dem Strom erfasst bzw. vorgenommen werden, der in dem in einer bestimmten Betriebsphase aktivierten Stellantrieb fließt. Beispielsweise für die Betriebspahse zwischen 0° und 11° (bei der Kurve Gₘᵢₙ) wird der Stellantrieb 26 erregt und dessen Spulenstrom erfasst. Erreicht der Spulenstrom, welcher ein Maß für die Leistungsabgabe bzw. auch das Moment des Elektromotors 30 des Stellantriebs 26 ist, einen bestimmten Schwellenwert, so kann erkannt werden, dass der Elektromotor 30 den Grenzbereich seiner Leistungsfähigkeit erreicht hat, der dann selbstverständlich mit einem bestimmten Drehmoment am Segmentzahnrad 14 korrespondiert, so dass durch die in den Figuren nicht dargestellte Ansteuervorrichtung eine Umschaltung auf den stärkeren Stellantrieb 28 vorgenommen werden kann.

Durch die erfindungsgemäße Vorgehensweise, in verschiedenen Betriebsphasen, in welchen größenmäßig verschiedene Antriebsmomente durch die Stellantriebe bereitgestellt werden müssen, auch verschieden dimensionierte Stellantriebe wirken zu lassen, kann eine deutlich verbesserte Betriebscharakteristik einer derartigen Stelleinrichtung erzielt werden. Von Bedeutung hierfür ist, dass kleiner dimensionierte Stellantriebe bessere dynamische Eigenschaften aufweisen, als größer dimensionierte Stellantriebe, d.h. im entsprechenden Drehmomentenbereich zur Erzeugung schnellerer Stellbewegungen in der Lage sind. Durch die Zuordnung verschiedener Momentenbereiche zu verschiedenen Stellantrieben lässt sich also in jeder der Betriebsphasen dann eine optimale Betriebscharakteristik erzielen, wobei nicht ein für einen größeren Bereich eines Stellvorgangs an sich überdimensionierter Stellantrieb die ganze Zeit wirksam sein muss.

Es sei darauf hingewiesen, dass das erfindungsgemäße Prinzip, in verschiedenen Betriebsphasen verschiedene Stellantriebe wirksam werden zu lassen, auch dadurch realisiert werden kann, dass in einer Phase, in welcher ein geringeres Drehmoment zu erzeugen ist, beispielsweise nur ein Stellantrieb wirksam ist, und in einer Phase, in welcher eine größere Momentenabgabe erfordert wird, ein weiterer, ggf. gleich dimensionierter Stellantrieb zugeschaltet wird. Auch ist es selbstverständlich, dass in den verschiedenen Betriebsphasen jeweils mehrere Stellantriebe parallel wirksam sein können.

In den Figuren 8 und 9 sind weitere Ausgestaltungsvarianten einer erfindungsgemäßen Stelleinrichtung dargestellt, welche ebenfalls von dem erfindungsgemäßen Prinzip, in verschiedenen Phasen durch entsprechende Ansteuerung verschiedener Stellantriebe entsprechende Momente zu erzeugen, Gebrauch machen. Während bei den mit Bezug auf die Figuren 1 bis 7 beschriebenen Ausgestaltungsvarianten die beiden Stellantriebe ihr Antriebsmoment im Wesentlichen parallel in die Stelleinrichtung bzw. in dem Aktuatorteil 50 derselben eingeleitet haben, zeigen die Figuren 8 und 9 eine serielle Wirkungsweise. So erkennt man in Figur 8, dass an dem Gehäuse 12 der Stelleinrichtung 10 ein Trägerteil 58 um die Schwenkachse A1 bzw. einen Lagerzapfen 60 schwenkbar getragen ist. An dem Trägerteil 58 wiederum ist der Stellantrieb 26 bzw. ein Gehäuse desselben getragen, so dass durch Erregung des Stellantriebs 26 das Segmentzahnrad 14, welches ebenfalls um den Lagerzapfen 60 schwenkbar ist, bezüglich des Trägerteils 58 verschwenken kann. Der Stellantrieb 28 bzw. ein Gehäuse desselben ist am Gehäuse 12 getragen, und durch Erregung des Stellantriebs 28 kann nunmehr das gesamte Trägerteil 58 zusammen mit dem daran getragenen Stellantrieb 26 und auch zusammen mit dem Segmentzahnrad 14 verschwenkt werden. Hier würden bei gleichzeitiger Erregung beider Stellantriebe 26, 28 sich also die Stellwege addieren, während bei den Ausgestaltungsformen gemäß den Figuren 1 bis 7 bei gleichzeitiger Erregung sich die Antriebsmomente addieren würden. Um auch hier wieder in verschiedenen Betriebsphasen verschieden stark dimensionierte Stellantriebe 26, 28 wirksam werden lassen zu können, muss zumindest bei dem schwächer dimensionierten Stellantrieb, also beispielsweise dem Stellantrieb 26, eine selbsthemmende Wirkung vorgesehen sein, so dass dann, wenn ein größeres Moment zu erzeugen ist, kein ungewolltes Zurückdrehen des schwächer dimensionierten Stellantriebs auftreten kann. Auch bei der Ausgestaltungsform gemäß Fig. 8 könnte also beispielsweise in einer Betriebsphase, in welcher nur ein vergleichsweise kleines zusätzliches Antriebsmoment erforderlich ist, der Stellantrieb 26 erregt werden, während der Stellantrieb 28 nicht erregt wird, und in einer Phase, in welcher ein vergleichsweise großes Antriebsmoment erforderlich ist, könnte bei nicht erregtem und auf Grund der Selbsthemmung im Ruhezustand verharrenden Stellantrieb 26 dann der Stellantrieb 28 erregt werden.

Bei der Ausgestaltungsform gemäß Fig. 9 ist das Segmentzahnrad 14 zunächst wiederum direkt antreibbar durch den Stellantrieb 26, d.h eine Antriebswelle 68 desselben treibt über das Abtriebszahnrad 34 das Segmentzahnrad 14 an. Das Gehäuse 64 des Stellantriebs 26 kann nunmehr durch den Stellantrieb 28 bzw. dessen Ausgangswelle 66 zur Drehung angetrieben werden, wobei wieder der Stellantrieb 28 bezüglich des Gehäuses 12 getragen ist. Auch hier ist im Bereich des Stellantriebs 26 wieder eine selbsthemmende Wirkcharakteristik erforderlich, um bei Erregung des stärker dimensionierten Stellantriebs 28 ein Zurückdrehen bzw. Leerdrehen des Stellantriebs 26 zu verhindern.

## Patentansprüche

1. Stelleinrichtung, insbesondere zur Betätigung einer Reibungskupplung, umfassend:
- ein Abtriebsglied (16),
- wenigstens zwei Stellantriebe (26, 28),
- eine Bewegungsumsetzanordnung (14), durch welche eine Antriebsbewegung der wenigstens zwei Stellantriebe (26, 28) in eine Stellbewegung des Abtriebsglieds (16) umsetzbar ist,
- eine Ansteuervorrichtung, durch welche die wenigstens zwei Stellantriebe (26, 28) zur Erzeugung einer Antriebsbewegung aktivierbar sind,
**dadurch gekennzeichnet, dass** ein von der Stelleinrichtung (10) vorzunehmender Stellvorgang in wenigstens zwei Betriebsphasen unterteilt ist und dass die Ansteuervorrichtung dazu ausgebildet ist, in wenigstens einer der Betriebsphasen wenigstens einen der Stellantriebe (26, 28) zur Erzeugung einer Antriebsbewegung zu aktivieren und in wenigstens einer weiteren der Betriebsphasen den wenigstens einen der Stellantriebe (26, 28) nicht zur Erzeugung einer Antriebsbewegung zu aktivieren.

2. Stelleinrichtung nach Anspruch 1,
**dadurch gekennzeichnet, dass** in der wenigstens einen der Betriebsphasen die Ansteuervorrichtung nur den wenigstens einen der Stellantriebe (26, 28) zur Erzeugung einer Antriebsbewegung aktiviert und in der wenigstens einen weiteren der Betriebsphasen wenigstens einen anderen der Stellantriebe (26, 28) zur Erzeugung einer Antriebsbewegung aktiviert.

3. Stelleinrichtung nach Anspruch 1 oder 2,
**dadurch gekennzeichnet, dass** wenigstens zwei der Stellantriebe (26, 28) unterschiedliches Leistungsvermögen aufweisen und dass die Ansteuervorrichtung in verschiedenen Betriebsphasen Stellantriebe (26, 28) verschiedenen Leistungsvermögens zur Erzeugung einer Antriebsbewegung ansteuert.

4. Stelleinrichtung nach einem der Ansprüche 1 bis 3,
**dadurch gekennzeichnet, dass** in verschiedenen der Betriebsphasen durch den oder die Stellantriebe (26, 28) verschiedene Antriebskräfte bereitzustellen sind.

5. Stelleinrichtung nach einem der Ansprüche 1 bis 4,
**dadurch gekennzeichnet, dass** die Stellantriebe (26, 28) elektromotorische Stellantriebe sind und dass ein Übergang von einer Betriebsphase zu einer weiteren Betriebsphase dann vorliegt, wenn ein in wenigstens einem während der einen Betriebsphase aktivierten Stellantrieb fließender Strom einen vorbestimmten Schwellenwert erreicht.

6. Stelleinrichtung nach einem der Ansprüche 1 bis 5,
**dadurch gekennzeichnet, dass** der Stellvorgang ein Auskuppelvorgang einer Reibungskupplung ist und dass beim Verstellen von einer Einkuppelstellung in Richtung Auskuppeln in einer ersten Betriebsphase ein erster der Stellantriebe (26, 28) aktiviert ist und in einer zweiten Betriebsphase ein zweiter der Stellantriebe (26, 28) aktiviert ist.

7. Stelleinrichtung nach Anspruch 6,
**dadurch gekennzeichnet, dass** der zweite der Stellantriebe (26, 28) ein größeres Leistungsvermögen aufweist als der erste der Stellantriebe (26, 28).

8. Stelleinrichtung nach einem der Ansprüche 1 bis 7,
**dadurch gekennzeichnet, dass** der Stellvorgang ein Einkuppelvorgang einer Reibungskupplung ist und dass beim Verstellen von einer Auskuppelstellung in Richtung Einkuppeln in einer ersten Betriebsphase ein erster der Stellantriebe (26, 28) aktiviert ist und in einer zweiten Betriebsphase ein zweiter der Stellantriebe (26, 28) aktiviert ist.

9. Stelleinrichtung nach Anspruch 8,
**dadurch gekennzeichnet, dass** der zweite der Stellantriebe (26, 28) ein kleineres Leistungsvermögen aufweist als der erste der Stellantriebe.

10. Stelleinrichtung nach einem der Ansprüche 1 bis 9,
**dadurch gekennzeichnet, dass** das Abtriebsglied (16) durch ein Krafterzeugungsorgan eines zu betätigenden Systems beaufschlagbar ist und dass die Stelleinrichtung (10) ferner wenigstens ein das Abtriebsglied (16) beaufschlagendes und der Krafteinwirkung des wenigstens einen Krafterzeugungsorgans entgegenwirkendes Kompensationskrafterzeugungsorgan (40) aufweist.
